# EUROPEAN PATENT APPLICATION

(11) **EP 2 518 446 A1**
(43) Date of publication of application: **31.10.2012**
(21) Application number: 11164089.2
(22) Date of filing: 28.04.2011
(51) Int. Cl.: G01C 21/36

(54) **Vehicle Navigation System Indicating a Lane Marking**

(71) Applicant: Harman Becker Automotive Systems GmbH, 76307 Karlsbad (DE)
(72) Inventor: Schütz, Simon, 68161, Mannheim (DE); Ivanov, Vladimir, 81375, München (DE); Spindler, CC., 76135, Karlsruhe (DE); Fischer, Martin, 80805, München (DE)
(74) Representative: Bertsch, Florian Oliver

(57) **Abstract**

The present invention relates to a vehicle navigation system, comprising a map database storing map data comprising links and attributes, said links representing road segments, wherein a lane marking attribute is assigned to a subset of said links to indicate that said links included in the subset of links contain information about which kind of marking is present on a link between two lanes. Furthermore, a processing unit configured to generate an image of the map data to be displayed to a user of the navigation system is provided, wherein the processing unit is configured to generate the image of the map data taking into account the lane marking attribute by indicating on the image of the map data the information which marking is present on the link between two lanes.

## Description

### Technical Field

The invention relates to a vehicle navigation system comprising a map database storing map data, to a method for generating an image of map data to be displayed on a display and to a method for generating a map database.

### Background

Vehicle navigation systems are known which determine a route from a starting point to a destination using map data. Generally, these navigation devices may perform a search for a route which minimizes a cost function. The cost function may represent travel time, distance or fuel costs associated with the route, or any other suitable quantity to be minimized. The route which is optimum may depend on the activation of prefer or avoid options. Prefer and avoid options for highways, ferries or tunnels may be provided.

In addition to route determination, navigation systems furthermore provide route guidance functions via a user interface. The provision of guidance information may involve the generation of optical or audio output which provides information on a portion of a road network surrounding the vehicle, possibly combined with optical or audio indications to a driver.

The provision and use of a map database which allow data to be used efficiently for a route search and route guidance can represent a considerable challenge. For illustration, for route search, information on a fine scale structure of the road structure is usually not required for locations remote from the starting point and destination. However, information on at least certain types of roads, such as highways, at locations remote from both the starting point and destination will be required for the route search. Guidance functions, however, may require information only in an area surrounding the vehicle but to a greater level of detail. Especially in urban areas the provision of guidance information including an optical output of the road network surrounding the vehicle is a challenging task, as for a precise guidance it may be necessary to inform the driver which lane of a road section the driver should take to follow the recommended route.

### Summary

In this context a need exists to generate a realistic view of the vehicle surrounding which helps the driver to better recognize a generated optical route guidance output with the real world vehicle surroundings.

This need is met by the features of the independent claims. In the dependent claims further embodiments are described.

According to a first aspect a vehicle navigation system is provided which comprises a map database and a processing unit. The map database stores map data comprising links and attributes, said links representing road segments. A lane marking attribute is assigned to a subset of said links to indicate that said links included in the subset of links contain information about which kind of marking is present on a link between two lanes. The processing unit is then configured to generate an image of the map data to be displayed to a user of the navigation system, wherein the processing unit is configured to generate the image of the map data taking into account the lane marking attribute by indicating on the image of the map data the information which marking is present on the link between two lanes.

With the provision of the lane marking attribute it is possible to generate a more realistic image of the vehicle surroundings. The lane marking attribute helping to display the lane marking between two lanes is helpful for the driver for determining which of the lanes of a road segment should be followed to follow a recommended route.

One possibility for a lane marking attribute is a lane dividing attribute indicating which kind of marking is present on a link between two lanes having the same driving direction. Another possibility for a lane marking attribute is a center dividing attribute indicating which kind of marking is present on a link between two lanes having opposite driver directions. This center dividing attribute indicates the marking on a road between two lanes separating one driving direction from the opposite driving direction.

When the road segment has more than one lane for one driving direction, it is possible that the lane marking attribute contains a lane mask allowing it to be specified to which lane of a link a lane marking attribute belongs to. The lane mask can be a Bool value indicating to which of the lanes of a road segment the lane marking attribute applies.

The lane dividing attribute can indicate the lane marking on the right side or on the left side in the driving direction of the vehicle. Preferably, the lane dividing attribute indicates the kind of marking present on a side of the lane located to the outside of the road segment in a driving direction of the vehicle. This means that the lane dividing attribute indicates the kind of marking present on a lane located on the right side in the driving direction of the vehicle.

The center dividing attribute can be either assigned directly to a link when it cannot be assigned to one of the lanes of the link. This is possible when only one lane per driving direction is present on a link. If, however, lane information is available for the link, the center dividing attribute can be assigned to a lane of the link.

Additionally, it is possible that the links describing road segments have a storing direction describing the road segment from a starting point to an end point. Preferably, the center dividing attribute is assigned to an innermost lane of the link for which the driving direction corresponds to the storing direction. Furthermore, the same center dividing attribute shall not be assigned to the counterpart lane of the road segment in the negative storing direction, as this would be redundant data.

The navigation system may furthermore comprise a guidance output unit providing route guidance information to the user of the navigation system. The guidance output unit may generate the route guidance information for one of the links taking into account the lane marking attribute for said one link. By way of example if the lane marking attribute indicates that a change between two lanes is not allowed, e.g. by a solid line, the guidance output will take into account this information and will not generate a route guidance for which a lane change at a road segment were the lane change is prohibited is recommended.

Additionally, it is possible that the map database stores the map data in different levels, each level including map data representing a road network in a different level of detail. The lane marking attribute can then be stored in the level representing the road network in the highest level of detail.

According to another aspect a method for generating an image of map data to be displayed to the user of the navigation system is provided, wherein a geographic region of the map data to be displayed to the user is determined. In an additional step the map database is accessed where the map data are stored, the map data comprising links and attributes, wherein the lane marking attribute is assigned to a subset of said links to indicate that said links included in the subset of links contain an information about which kind of marking is present on a link between two lanes. In an additional step an image of the map data is generated taking into account the lane marking attribute by indicating on the image of the map data the information about which marking is present on a link between two lanes. The generated image of the map data shows the marking of a road segment between two lanes. The generated image may represent a three-dimensional view of the map data, the surroundings of the vehicle indicating the lane markings between the lanes.

The invention furthermore relates to a method for generating a map database, the method comprising the step of retrieving data including information on road segments and including information about which kind of marking is present on a road segment between two lanes. For a plurality of road segments it is then determined whether, for one of said plurality of road segments, information about which kind of marking is present on said one road segment between two lanes. In an additional step a lane marking attribute is then selectively assigned to a link representing said one road segment if information is present about which kind of marking is present on said road segment between two lanes. In an additional step said lane marking attribute is then stored linked to said link in the map database.

### Brief Description of the Drawings

The foregoing and other features in the embodiments of the invention will become more apparent from the following detailed description of embodiments when read in conjunction with the accompanying drawings.
Fig. 1 is a schematic block diagram of a navigation system allowing the display of a lane marking,
Fig. 2 shows a table indicating how a lane marking attribute in a map database corresponds to possible lane markings,
Fig. 3 is a schematic view of a road segment with different lanes with which the assignment of lane marking attributes to lanes is explained,
Fig. 4 is a flowchart illustrating the use of displaying lane markings in an image of a vehicle navigation system, and
Fig. 5 is a flowchart illustrating the steps of generating a map database containing lane marking attributes.

### Detailed Description of the Drawings

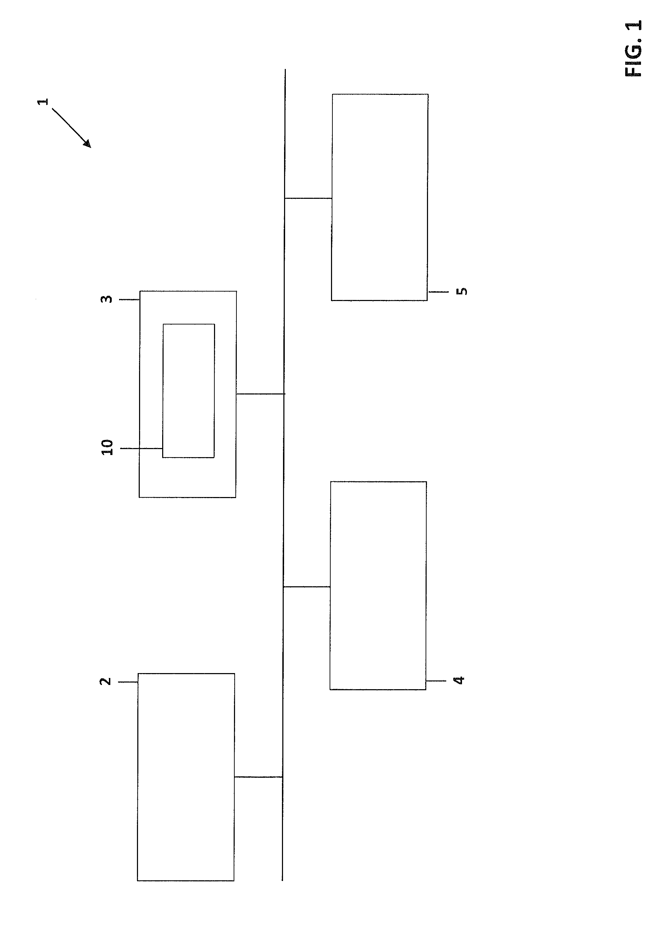

Fig. 1 schematically illustrates a vehicle navigation system with which lane markings between lanes can be displayed on a display of the navigation system 1. The navigation system 1 comprises a processing unit 2 controlling the operation of the navigation device and additionally being responsible for generating an image to be displayed to a user of the navigation system using a display 4. The processing unit 2 may comprise a central processing unit, for example in form of one or more microprocessors, digital signal processors or application-specific integrated circuits. The navigation system furthermore includes a map database stored in a memory 3. The memory 3 may comprise anyone or any combination of various types of memory, such as random access memory, flash memory or hard drive, but also removable memories, such as a compact disk, a DVD, a memory card or the like. The display 4 is used for outputting guidance information to a user. Additionally, an output unit (not shown) for audio output may be provided. The navigation system e.g. furthermore includes in input interface 5 which allows a user to set options, to input a destination.

The navigation device may include additional components, such as a position sensor and/or wireless receiver and/or vehicle interface. The position sensor may be adapted to determine the current position of the vehicle in which the navigation system is installed. The position sensor may comprise a GPS sensor, a Galileo sensor, a position sensor based on mobile telecommunications networks and the like. The wireless receiver may be configured to receive information for updating the map database stored in a memory 3. The vehicle interface may allow the processing unit to obtain information from other vehicle systems, a vehicle status information via the vehicle interface.

The memory 3 stores a map database 10 comprising map data. The map database includes information on links representing road segments and attributes. The map database in particular includes attributes indicative of lane markings between two lanes of a road segment. The map database may be a database storing the map data using a format according to the standard of navigation data standard (NDS). The road network containing the different roads are stored as links in the database, a link having a starting point and an end point. Furthermore, fixed attributes or flexible attributes may be assigned to the links. A fixed attribute is an attribute that is always present for a link. A flexible attribute may be present for a link if necessary and may be omitted for certain links. An example for a fixed attribute is a flag indicating whether road is a tunnel, a bridge, etc. An example of a flexible attribute is a speed limit or a drive through prohibition. Lanes of a road segment are not modelled as separate objects, but as properties of a link. Thus, the information on existing lanes for a link are stored in the memory 3 as flexible attributes. This includes the number of lanes, the kind of lane, direction arrows on the lane, etc., which are again flexible attributes. In order to specify which lane on which link has the property of the flexible attribute, the respective flexible attribute is assigned to a link and grouped with a lane mask to specify the affected lanes. By way of example a lane mask of 00110 indicates that a certain attribute is assigned to lanes 3 and 4 out of 5 lanes, the figure "1" representing the Boolean value that a certain attribute applies to a certain lane, but not to lanes 1, 2, and 5.

According to the invention a lane marking attribute is provided in the database 10 as a flexible attribute providing the information which kind of marking is present on a link between two lanes. In the database two different types of lane marking attributes can be distinguished. One lane marking attribute is a lane dividing attribute describing the lane marking between lanes of the same driving direction. A further lane marking attribute can be a center dividing attribute which indicates the lane marking of two lanes having opposite driving directions. If the corresponding road segment has the same number of lanes for each driving direction, the center dividing attribute describes the marking in the middle of a road.

The map database 10 can include a plurality of layers, the different layers representing different levels of a detail of the road network to be displayed. By way of example each layer may be a table in a SQL database. The database can be a relational database in which the relation is stored in a two-dimensional table, each table containing a unique set of rows and columns. A single record is stored in a table as a row, also known as a tuple, while attributes of the data are defined in columns or fields in the table. The characteristics of the data, or the column, relate one record to another. In the present embodiment a record could be a link or road segment, the row indicating the different attributes of the road segment.

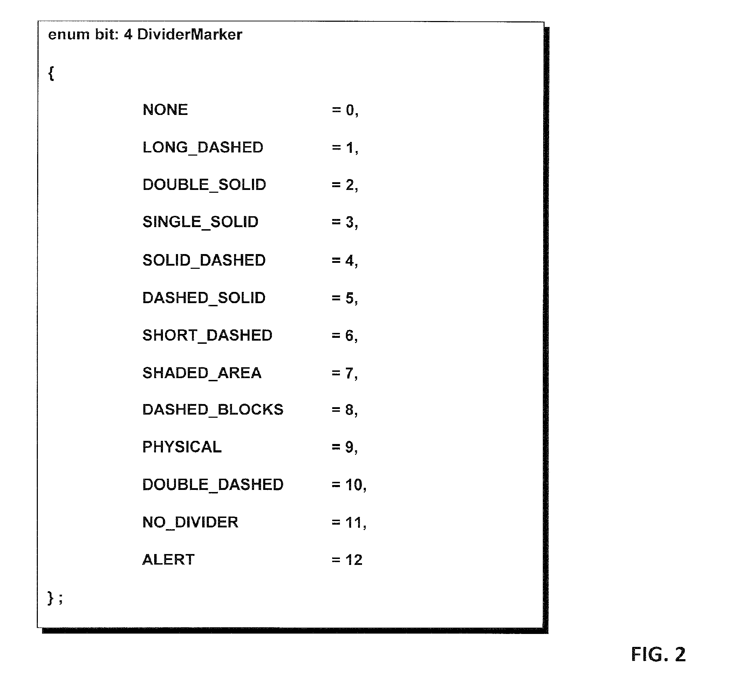

In Fig. 2 a table is shown defining the lane marking attribute in a data script language. In the first line of Fig. 2 it is indicated that the attribute is a 4 bit value allowing 16 different values from 0 to 15, the values 13-15 being unused in the example shown. By way of example if the lane marking attribute has the value of 0, it can be concluded that no marking is present between two lanes, a value of 3 indicates a single solid marking between two lanes. The values 5 and 4 define a double line where one of the two is dashed and the other is solid or a double line where one of the two is solid and the other is dashed. The indications given in Fig. 2 should be interpreted from left to right and in driving direction.

For the definition of a lane marking attribute a flexible attribute of the type lane marking attribute is attached with an appropriate value shown in Fig. 2 grouped with a lane mask specifying the affected lanes to a link, a link describing a certain road segment of the road network.

When a lane marking attribute is assigned to a link, the lane marking attribute defines the side of the lane located to the outside of the road in the driving direction.

The center dividing attribute may be assigned to the affected lane if lane information is available on the corresponding link. If no lane information is available for that link, the center dividing attribute is directly assigned to the link. The center dividing attribute is also a flexible attribute with an appropriate value shown in the table of Fig. 2 and may be grouped with a lane mask for the lane for which a storing direction (the way a road segment is stored from a starting point to an end point) is the positive storing/ digitization direction. The center dividing attribute is then provided on the side of the lane to the inside of the road in the driving direction. The center dividing attribute shall then not be assigned to the counterpart lane in the negative digitization direction, as this would be redundant data.

If no lane information is available, then the center dividing attribute cannot be assigned to a certain lane on the link but is directly assigned to the link.

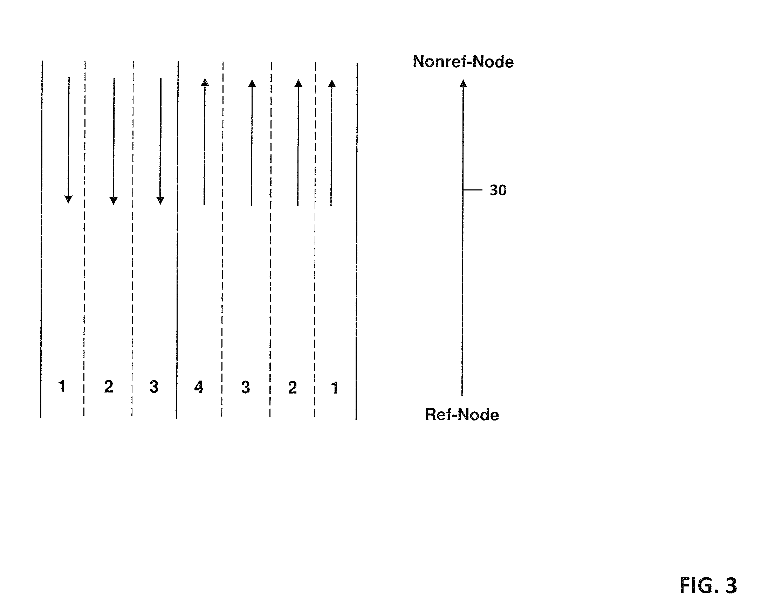

The storing of the lane marking attributes to the different lanes is explained in further detail with reference to Fig. 3. In the embodiment shown a road segment has four lanes in a driving direction that corresponds to the storing or digitization direction, the storing direction being indicated by arrow 30, the road segment being described as starting at a reference point and ending at a non-reference point, the direction from the reference point to the non-reference point defining the storing/ digitization direction. In the embodiment shown the lanes 4, 3 and 2 have a lane dividing attribute of the type "along_dashed" on the outer side of the road.

In the backward direction lanes 3 and 2 have the same property.

The center dividing attribute is of the type single_solid. It is located between lane 4 in the digitization direction and lane 3 in the opposite direction. As this information may only be assigned to one lane, it is assigned to lane 4, as lane 4 has the same direction as the digitization direction.

Lane 1 in the forward direction and lane 1 in the backward direction may also have a lane dividing attribute of the type single_solid.

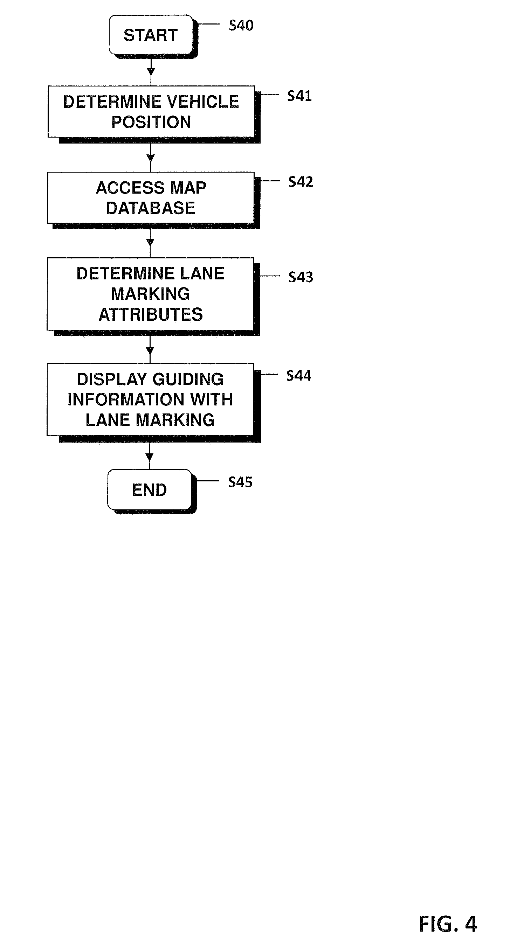

In connection with Fig. 4 the generation of an image showing the vehicle surroundings in the front of a vehicle is explained, in which the displayed image additionally contains the lane markings as explained above in connection with Fig. 3. In a first step S40 the method starts and in steps S41 the vehicle position is determined. Based on the vehicle position the navigation system 1 is capable of displaying either a two-dimensional or three-dimensional image of the vehicle surroundings, especially of the front part of the vehicle. If a two-dimensional view is displayed, a bird's view may be generated as shown in Fig. 3. If a three-dimensional image is generated, an image may be generated that corresponds to the view of the vehicle surroundings as seen by the driver when looking through the front window. When the vehicle position and thus the position of the vehicle in a map is known, the map database 10 may be accessed in step S42. For generating the image to be displayed to the driver, the possible lane marking attributes are determined in step S43. In step S44 the guiding information can be displayed on an image of the road segment lying ahead of the vehicle in which the different lane markings between the lanes are shown. The method ends in step S45.

With the steps shown in Fig. 4 a realistic representation of the displayed information is possible.

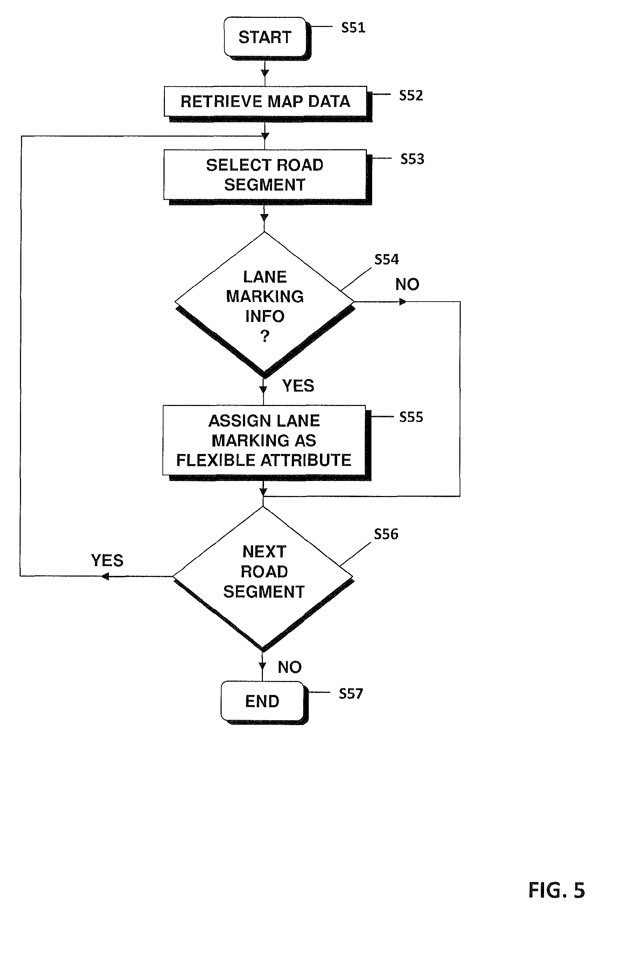

In connection with Fig. 5 a process is shown allowing to generate a map database 10 as explained above. The method starts in step S51. In step S52 data are retrieved including information on the road segments and including information about which kind of marking is present on a road segment between two lanes. In step S53 a road segment from the map database is selected and it is checked in step S54 whether a lane marking information, either a center dividing attribute or a lane dividing attribute or both of them, is available for the selected road segment. If this is the case, the identified lane marking is assigned as a flexible attribute. If a lane information is present, the lane marking attribute is assigned to the corresponding lane using the lane mask. If no lane information is provided, the lane marking attribute may be simply assigned to the link. By way of example this latter example may apply when a road segment only has one lane per driving direction (step S55). If it is determined that no lane marking information is present for the selected road segment, the process may continue after step S55. In the next step S56 it is checked whether a next road segment of the road network can be selected. If this is the case, steps S53-S55 are carried out again until all lane marking attributes present for a road network are assigned to the corresponding road segments.

In step S55 the assigned lane marking attributes are stored as a flexible attribute to the link, the process ending in step S57.

## Claims

1. A vehicle navigation system (1), comprising:
- a map database (10) storing map data comprising links and attributes, said links representing road segments, wherein a lane marking attribute is assigned to a subset of said links to indicate that said links included in the subset of links contain information about which kind of marking is present on a link between two lanes,
- a processing unit (2) configured to generate an image of the map data to be displayed to a user of the navigation system, wherein the processing unit (2) is configured to generate the image of the map data taking into account the lane marking attribute by indicating on the image of the map data the information which marking is present on the link between two lanes.

2. The navigation system (1) according to claim 1, wherein the lane marking attribute contains a lane dividing attribute indicating which kind of marking is present on a link between two lanes having the same driving direction.

3. The navigation system (1) according to claim 1 or 2, wherein the lane marking attribute contains a center dividing attribute indicating which kind of marking is present on a link between two lanes having opposite driving directions.

4. The navigation system (1) according to any one of the preceding claims, wherein the lane marking attribute furthermore contains a lane mask allowing it to be specified to which lane of a link a lane marking attribute belongs to.

5. The navigation system (1) according to any of claims 2 to 4, wherein the lane dividing attribute indicates the kind of marking present on a side of the lane located to the outside of the road segment in a driving direction of the vehicle.

6. The navigation system (1) according to any one of claims 3 to 5, wherein the center dividing attribute is directly assigned to a link when it can not be assigned to one of the lanes of a link.

7. The navigation system (1) according to any one of claims 3 to 5, wherein the center dividing attribute is assigned to a lane of the link if lane information is available for said link.

8. The navigation system (1) according to any one of claims 3 to 7, wherein the link describing a road segment has a storing direction describing the road segment from a starting point to an end point, wherein the center dividing attribute is assigned to an innermost lane of the link for which the driving direction corresponds to the storing direction.

9. The navigation system (1) according to any one of the preceding claims, further comprising a guidance output unit (4) providing route guidance information to the user of the navigation system, wherein the guidance output unit generates the route guidance information for one of the links taking into account the lane marking attribute for said one link.

10. The navigation system (1) according to any one of the preceding claims, wherein the map database (10) stores the map data in different levels, each level including map data representing a road network in a different level of detail, the lane marking attribute being stored in the level representing the road network in the highest level of detail.

11. A method for generating an image of map data to be displayed to a user of a navigation system (1) the method comprising the steps of:
- determining a geographic region of the map data to be displayed to the user,
- accessing a map database (10) storing map data comprising links and attributes, said links representing road segments, wherein a lane marking attribute is assigned to a subset of said links to indicate that said links included in the subset of links contain an information about which kind of marking is present on a link between two lanes,
- generating the image of the map data taking into account the lane marking attribute by indicating on the image of the map data the information about which marking is present on the link between two lanes.

12. The method according to claim 11, wherein a 3 dimensional view of the map data is generated when the image of the map data is generated.

13. The method according to claim 11 or 12, wherein a lane mask specifying to which lane of a link a lane marking attribute belongs to, is used to determine to which lane a lane marking attribute belongs to.

14. The method according to any one of claims 11 to 13, wherein the lane marking attribute of map data contain a lane dividing attribute indicating which kind of marking is present on a link between two lanes having the same driving direction, wherein the lane dividing attribute is used to indicate the kind of marking present on a side of the lane located to the outside of the road segment in a driving direction of the vehicle.

15. The method according to any one of claims 11 to 14, wherein the lane marking attribute of map data contains a center dividing attribute indicating which kind of marking is present on a link between two lanes having opposite driving directions, wherein the link describing a road segment has a storing direction describing the road segment from a starting point to an end point, wherein the center dividing attribute is assigned to an innermost lane of the link for which the driving direction corresponds to the storing direction.

16. The method according to any one of claims 11 to 15, further comprising the step of generating a route guidance information to the user of the navigation system, wherein the route guidance information is generated for one of the links taking into account the lane marking attribute for said one link.

17. A method for generating a map database, comprising the steps of
- retrieving data including information on road segments and information about which kind of marking is present on a road segment between two lanes, for a plurality of road segments
- determining whether, for one of said plurality of road segments, information is present which kind of marking is present on said one road segment between two lanes,
- selectively assigning a lane marking attribute to a link representing said one road segment if information is present about which kind of marking is present on said one road segment between two lanes,
- storing said lane marking attribute linked to said link in said map database.
